Europäisches Patentamt

European Patent Office

Office européen des brevets

(19)

(11) **EP 1 059 516 A1**

(12) **EUROPÄISCHE PATENTANMELDUNG**

(43) Veröffentlichungstag:
**13.12.2000 Patentblatt 2000/50**

(51) Int Cl.7: **G01F 23/296**

(21) Anmeldenummer: **99110858.0**

(22) Anmeldetag: **07.06.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Endress + Hauser GmbH + Co.**
**79689 Maulburg (DE)**

(72) Erfinder:
• **Getman, Igor Prof. Dr.**
**79540 Lörrach (DE)**

• **Lopatin, Sergej Dr.**
**79539 Lörrach (DE)**

(74) Vertreter: **Andres, Angelika**
**PatServ-Zentrale Patentabteilung,**
**Endress + Hauser (Deutschland) Holding GmbH,**
**Postfach 2222**
**79574 Weil/Rhein (DE)**

(54) **Verfahren und Vorrichtung zur Füllstandsmessung an Behältern**

(57)     Verfahren zur kontinuierlichen Füllstandsmessung an Behältern, nach dem in der Behälterwand (1) durch einen an ihr angeordneten Lambwellenerreger (6) eine Folge von $a_o$-mode-Lambwellenimpulsen ausgelöst wird und die Laufzeitdifferenz ($\Delta T$) zwischen der Laufzeit ($T_2$) dieser $a_o$-mode-Lambwellenimpulse zwischen dem Lambwellenerreger (6) und einem im Abstand zu diesem an der Behälterwand (1) angeordneten Lambwellenempfänger (7) bei dem momentanen Füllstand des Behälters (4) und der Laufzeit ($T_1$) bei leerem Behälter (4) ermittelt wird und daraus die dieser Laufzeitdifferenz ($\Delta T$) direkt proportionale momentane Füllstandshöhe abgeleitet wird.

Fig. 4

**Beschreibung**

Die Erfindung bezieht sich auf ein Verfahren zur Füllstandsmessung an Behältern und eine Vorrichtung zur Durchführung des Verfahrens.

Es ist bekannt zur Füllstandsmessung oder Füllstandsüberwachung an Behältern durch einen in Form eines elektroakustischen Wandlers außen an der Behälterwand angebrachten Lambwellenerreger in dieser Behälterwand Lambwellen zu erzeugen, die sich als periodisch sinusförmige Verformung beider Oberflächen der Behälterwand ausbreiten und von einem im Abstand zum Lambwellenerreger an derselben Behälterwand angebrachten Lambwellenempfänger aufgenommen und in ein elektrisches Signal zurückverwandelt werden. Abhängig von der Dicke der Behälterwand und der Erregerfrequenz können Wellen verschiedener Ordnungszahl erregt werden, von denen aber nur die der Ordnungszahl Null oder Grundmode(zeroth mode) an die Oberfläche gelangen und die erwähnten Verformungen der beiden Oberflächen zur Folge haben, die bezüglich der Mittelebene symmetrisch oder antisymmetrisch sein können (ULTRASONIC TECHNOLOGY, A Series of Monographs, General Editor Lewis Balamuth, Cavitron Corporation, New York,N.Y, RAYLEIGH AND LAMB WAVES, Physical Theory and Applications, I.A.Viktorov, Seite 69,70 und Seite 82 Abs.3).

Praktische Bedeutung für die Nutzung der Lambwellen bei Füllstandsmeßgeräten hatten dabei bisher in der Regel nur die symmetrischen Lambwellen der Ordnungszahl Null, die als $s_o$-mode (zeroth symmetrical mode)oder symmetrischer Grundmode bezeichnet werden. Diese erfahren nämlich, sobald die Behälterwand einseitig mit einem anderen Medium in Berührung kommt, eine signifikante Dämpfung in ihrer Amplitude. Wenn also im Bereich eines zu überwachenden Füllstandes an der Behälterwand im Abstand zueinander der Lambwellenerreger und der Lambwellenempfänger einer entsprechenden Füllstandsmeßvorrichtung angebracht werden, kann ein vom Lambwellenempfänger empfangenes Signal als Anzeige dafür genutzt werden, daß sich im Meßbereich kein Füllgut befindet, während das Ausbleiben des Signals bzw. ein in seiner Amplitude stark gedämpftes Signal anzeigt, daß der Füllstand im Meßbereich erreicht ist. Eine solche Vorrichtung ist also als Grenzschalter einsetzbar, etwa zur Überwachung eines maximalen und/oder minimalen Füllstands, wobei die Meßvorrichtung bzw. Teile von ihr vorteilhafterweise nicht mit dem Füllgut in Berührung kommen, so daß der Einsatz auch im Zusammenhang mit beispielsweise explosiven oder ätzenden Stoffen möglich ist.

Nicht möglich ist mit diesen bekannten Vorrichtungen jedoch eine kontinuierliche Messung oder Überwachung des Füllstandes.

Aufgabe der Erfindung ist es, ein Verfahren und eine Vorrichtung zur kontinuierlichen Messung und Überwachung des Füllstandes an Behältern unterschiedlichster Art, z.B. auch an Rohrleitungen, zu schaffen.

Dies wird erfindungsgemäß mit einem Verfahren erreicht, nach dem in der Behälterwand durch einen an ihr angeordneten Lambwellenerreger eine Folge von $a_o$-mode-Lambwellenimpulsen (zeroth antisymmetrical mode) ausgelöst wird und die Laufzeitdifferenz $\Delta T$ zwischen der Laufzeit $T_2$ dieser $a_o$-mode-Lambwellenimpulse zwischen dem Lambwellenerreger und einem im Abstand zu diesem an der Behälterwand angeordneten Lambwellenempfänger bei dem momentanen Füllstand des Behälters und der Laufzeit $T_1$ dieses Lambwellenimpulses bei leerem Behälter über derselben Strecke ermittelt wird und daraus die dieser Laufzeitdifferenz $\Delta T$ direkt proportionale momentane Füllstandshöhe abgeleitet wird.

Da in einer Behälterwand ausgelöste $a_o$-mode-Lambwellen, sobald ein anderes Medium mit der Behälterwand in Kontakt kommt, keine Veränderung in ihrer Amplitude sondern vielmehr in ihrer Laufzeit zwischen zwei definierten Punkten erfahren, wird mit dem erfindungsgemäßen Verfahren ein kontinuierliche Überwachung des Füllstandes an Behältern, und zwar mit hoher Genauigkeit, möglich; es wurden Abweichungen in der Meßgenauigkeit von weniger als lcm festgestellt.

Dabei kann die für einen bestimmten Behälter oder Anwendungsfall geltende Laufzeit $T_1$ der $a_o$-mode-Lambwelle zwischen dem Lambwellenerreger und dem Lambwellenempfänger bei leerem Behälter als Bezugsgröße in einer Software zur Ermittlung der Laufzeitdifferenz $\Delta T$ abgespeichert sein.

Da sich die Laufzeit der $a_o$-mode-Lambwellen als temperaturabhängig erwiesen hat, kann es von Vorteil sein, eine auf Temperaturschwankungen beruhende Änderung der Laufzeit der $a_o$-mode-Lambwelle in der Behälterwand entsprechend einem durch einen Temperaturmeßfühler genommenen Meßwert auszugleichen.

Eine andere erfindugsgemäße Möglichkeit, die Temperaturabhängigkeit der Laufzeit der $a_o$-mode-Lambwellen zu kompensieren, besteht darin, die sich mit der Füllhöhe im Behälter ändernde Laufzeit $T_2$ der Lambwelle über einer sich über den Füllbereich des Behälters erstreckenden Meßstrecke und die für den leeren Behälter geltende Laufzeit $T_1$ der Lambwelle über einer sich außerhalb des Füllbereichs erstreckenden Referenzstrecke fortlaufend zu messen. So werden bei jedem Meßvorgang und jeder Auswertung der Meßgrößen automatisch Schwankungen der Laufzeit, die nicht auf eine Änderung der Füllhöhe beruhen, ausgeglichen.

Bei einer ersten Ausführungsform einer Vorrichtung zur Durchführung des erfindungsgemäßen Verfahrens kann an der Außenwand des Behälters in Höhe der maximal zulässigen Füllhöhe der $a_o$-mode-Lambwellensender oder der $a_o$-mode-Lambwellenempfänger und vorzugsweise dicht über dem Behälterboden der $a_o$-mode-Lambwellenempfänger oder der $a_o$-mode-Lambwellensender angeordnet sein. Dies ermöglicht eine kontinuierliche Überwachung über die gesamte zulässige Füllhöhe des Behälters. Alle Teile der Meßvorrichtung sind außerhalb des Behälters angeordnet und kommen nicht mit dem Füllgut in Berührung.

Der $a_o$-mode-Lambwellensender kann über einen Pulsgenerator und einen Taktgeber und der $a_o$-mode Lambwellenempfänger über ein Band-pass-Filter und einen Verstärker mit einer Software verbunden sein, in der die Laufzeit der $a_o$-mode-Lambwelle bei leerem Behälter abgespeichert ist.

Außerdem kann auch die Laufzeit der $a_o$-mode-Lambwelle bei bis zur maximal zulässigen Füllhöhe befülltem Behälter in der Software abgespeichert sein.

Bei einer Ausführungsform der Vorrichtung zur Durchführung des erfindungsgemäßen Verfahrens mit Temperaturkompensation kann an der Außenwand des Behälters in Höhe der maximal zulässigen Füllhöhe der $a_o$-mode-Lambwellensender und dicht über dem Behälterboden ein erster $a_o$-mode-Lambwellenempfänger und außerhalb des Füllbereiches im Abstand d zum $a_o$-mode-Lambwellensender ein zweiter $a_o$-mode-Lambwellenempfänger angeordnet sein, wobei dieser Abstand d als Referenzmeßstrecke zur fortlaufenden Ermittlung der Laufzeit $T_1$ der $a_o$-mode-Lambwelle bei leerem Behälter dient. So wird für jeden in der Behälterwand ausgelösten $a_o$-mode-Lambwellenimpuls zum einen die sich mit der Füllhöhe ändernde Laufzeit in der einen Richtung und zugleich die für den leeren Behälter geltende Laufzeit über der Referenzstrecke in der anderen Richtung gemessen, und so temperaturbedingte Schwankungen der Laufzeit werden bei der Differenzbildung automatisch ausgeglichen.

Das erfindungsgemäße Verfahren und die Vorrichtung zu seiner Durchführung sind sehr preisgünstig und dabei zuverlässig. Es ist keine Kontaktpaste zwischen den Lambwellenempfängern bzw. dem Lambwellensensor und der Behälterwand nötig. Eine Temperaturkompensation, so sie erforderlich ist, ist ohne großen Aufwand möglich.

Im folgenden wird die Erfindung anhand der anhängenden Zeichnungen beispielhaft genauer beschrieben; es zeigen

Fig. 1    schematisch die Verformung einer Behälterwand durch sich ausbreitende Lambwellen des $s_0$-modes und des $a_0$-modes,

Fig. 2    ein Diagramm zur Veranschaulichung der vom Füllstand abhängigen, unterschiedlichen Laufzeiten einer Lambwelle des $a_0$-modes,

Fig. 2a    ein Diagramm, aus dem die direkte Abhängigkeit der Laufzeit einer Lambwelle des $a_0$-modes in einer Behälterwand vom Füllstand im Behälter ersichtlich ist,

Fig. 3    eine Skizze zur Veranschaulichung des erfindungsgemäßen Verfahrens,

Fig. 4    schematisch die Anordnung der wesentlichen Teile einer ersten Ausführungsform einer erfindungsgemäßen Füllstandsmeßvorrichtung an einem Behälter,

Fig. 5    schematisch die Anordnung der wesentlichen Teile einer zweiten Ausführungsform einer erfindungsgemäßen Füllstandsmeßvorrichtung mit Temperaturkompensation an einem Behälter und

Fig. 6    das Block-Schema einer erfindungsgemäßen Füllstandsmeßvorrichtung nach Fig. 4.

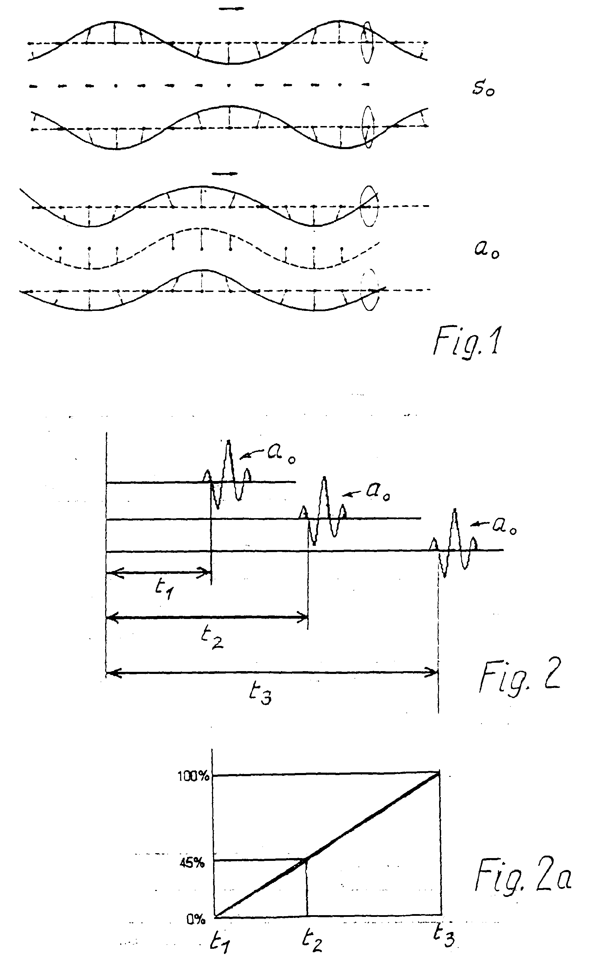

Fig. 1 zeigt schematisch die Verformung einer Behälterwand durch eine sich als Oberflächenwelle ausbreitende Lambwelle einmal des symmetrischen Grundmodes $s_o$ und einmal des antisymmetrischen Grundmodes $a_o$. Diese Lambwellen können in an sich bekannter Weise durch einen elektro-akustischen Wandler, der an der Behälterwand angebracht ist, hervorgerufen werden. Um den gewünschten Grundmode $s_o$ oder $a_o$ zu erhalten, ist die Erregerfrequenz, wie an sich bekannt, auf das Material und die Dicke der Behälterwand abzustimmen. Es ist erkenntlich, daß im Falle des symmetrischen $s_o$-modes die Oberflächenwellen an beiden Oberflächen der Behälterwand gleichzeitig ihre Minima und Maxima erreichen, die beiden Oberflächenwellen also symmetrisch zur Mittelinie der Behälterwand verlaufen. Im Falle des antisymmetrischen $a_o$-modes dagegen fallen die Minima der einen Oberflächenwelle mit den Maxima der anderen Oberflächenwelle zusammen und umgekehrt. Die auftretenden Teilchenverschiebungen sind durch Pfeile angedeutet.

Durch Experimente wurde festgestellt, daß, sobald die eine Fläche der Behälterwand in Kontakt mit einem Füllgut kommt, die Lambwellen des $a_o$-modes im Gegensatz zu denen des $s_o$-modes im Kontaktbereich keine ausgeprägte Dämpfung in ihrer Amplitude sondern eine deutliche Verlängerung ihrer Laufzeit erfahren. Diese Verzögerung ihrer Ausbreitung ist direkt proportional der Kontaktfläche zwischen Behälterwand und Füllgut, vorzugsweise eine Flüssigkeit. Dies ist in den Diagrammen der Fig. 2 und 2a dargestellt.

In Fig. 2 sind horizontal übereinander und ausgehend vom selben Punkt beispielhaft die Laufzeiten $t_1$, $t_2$, $t_3$ einer $a_o$-mode-Lambwelle in einer Behälterwand für drei verschiedene Füllstände des betreffenden Behälters aufgetragen, wobei die kurze Laufzeit $t_1$ für den Leerstand des Behälters, die Laufzeit $t_2$ für einen Zwischenstand des Füllgutes im Behälter und die längste Laufzeit $t_3$ für den Vollstand im Behälter stehen. In Fig. 2a ist auf der Horizontalen die Laufzeit t der $a_o$-mode-Lambwelle in der Behälterwand aufgetragen und auf der Vertikalen der Füllstand dieses Behälter in Prozent. Es ist erkenntlich, daß die Laufzeit der $a_o$-mode-Lambwelle direkt proportional mit dem Füllstand ansteigt.

Diese lineare Abhängigkeit der Laufzeit der $a_o$-

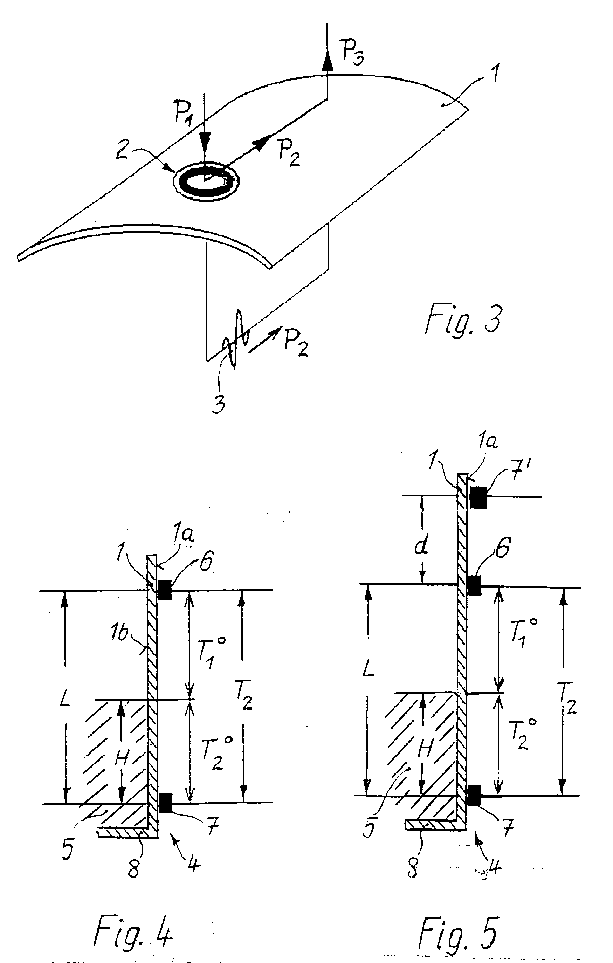

mode-Lambwellen vom Füllstand des Behälters macht sich die Erfindung für eine kontinuierliche Füllstandsmessung an Behältern zunutze. Das Prinzip ist in Fig. 3 vereinfacht wiedergegeben. Mit 1 ist ein Ausschnitt aus einer Behälterwand bezeichnet, der Pfeil $P_1$ weist auf die Stelle der Behälteraußenwand, an der durch einen Lambwellenerreger in Form eines elektro-akustischen Wandlers ein $a_o$-mode-Lambwellenimpuls ausgelöst wird, der sich, wie bei 2 angedeutet, kreisförmig in alle Richtungen ausbreitet. An der mit dem Pfeil $P_3$ bezeichneten Stelle wird der bei 3 angedeutete Lambwellenimpuls, der sich in der durch die Pfeile $P_2$ bezeichneten Richtung in der Behälterwand 1 fortpflanzt, von einem Lambwellenempfänger aufgenommen und in ein elektrisches Signal zurückverwandelt und gleichzeitig seine Laufzeit entlang dieser durch den Pfeil $P_2$ auf der Behälterwand 1 bezeichneten kürzesten Laufstrecke in der Behälterwand 1 zwischen $P_1$ und $P_3$ ermittelt. Die Laufzeit definiert sich als Quotient aus dieser (kürzesten) Laufstrecke zwischen $P_1$ und $P_3$ und der Gruppengeschwindigkeit C der Lambwelle bzw. des Lambwellenimpulses.

In Fig. 4 ist geschnitten die Wand 1 und ein Teil des Bodens 8 eines Behälters 4 dargestellt, der bis zur Höhe H mit einem Füllgut 5, vorzugsweise einer Flüssigkeit, gefüllt ist. An seiner Außenwand la sind in vertikalem Abstand L zueinander ein Lambwellenerreger 6 und ein Lambwellenempfänger 7 fest angeordnet. Es wird beispielhaft davon ausgegangen, daß der Lambwellenerreger 6 sich auf der maximal zulässigen Füllhöhe befindet und der Lambwellenempfänger 7 dicht über dem Behälterboden 8 angeordnet ist. Es ist aber auch möglich, die Anordnung umgekehrt zu treffen.

Aus dem oben Gesagten folgt, daß ein vom Lambwellenerreger 6 in der Behälterwand 1 ausgelöster $a_o$-mode-Lambwellenimpuls sich in dem Bereich H zwischen der (angenommenen) momentanen Füllhöhe des Füllgutes 5 und dem Lambwellenempfänger 7, wo also das Füllgut 5 in Kontakt steht mit der Behälterinnenwand 1b, mit einer anderen, und zwar geringeren, Gruppengeschwindigkeit C fortpflanzt als in dem Bereich L - H zwischen dem Lambwellenerreger 6 und der momentanen Füllhöhe, wo sich kein Füllgut befindet; anders gesagt, der Lambwellenimpuls hat in den beiden genannten Bereichen eine unterschiedliche Laufzeit, die im Bereich L - H kürzer ist als im Bereich H. Weiter folgt, daß mit Änderung der Füllhöhe sich die Gesamtlaufzeit $T_2$ der Lambwelle zwischen Lambwellenerreger 6 und Lambwellenempfänger 7 ebenfalls entsprechend verändert, d.h. mit steigendem Füllstand sich verlängert.

Bei leerem Behälter, bzw. wenn sich in dem Bereich L zwischen dem Lambwellenerreger 6 und dem Lambwellenempfänger 7 kein Füllgut befindet, beträgt die Laufzeit des Lambwellenimpulses

$$T_1 = \frac{L}{C_1}$$

Befindet sich Füllgut in diesem Bereich L, so verändert (verlängert) sich die Laufzeit auf $T_2$; sie setzt sich dann zusammmen aus der Laufzeit $T_1°$ im Bereich L - H ohne Füllgut und $T_2°$ im Bereich H mit Füllgut, und es ergibt sich

$$T_2 = T_1° + T_2° = \frac{L - H}{C_1} + \frac{H}{C_2}$$

Die Zeitdifferenz $\Delta T$ zwischen $T_1$ und $T_2$ ist dann direkt proportional zur absoluten Füllstandshöhe, und es gilt

$$\Delta T = T_2 - T_1 = H\left(\frac{1}{C_2} + \frac{1}{C_1}\right).$$

Wenn die Laufzeit $T_1$ des Lambwellenimpulses bei leerem Behälter 4 feststeht und als ein Eichfaktor in eine Meßvorrichtung eingeht, kann somit eine kontinuierliche Überwachung des Füllstandes an einem Behälter 4 durch fortlaufendes Messen der aktuellen Laufzeit $T_2$ eines auf den jeweiligen Behälter 4 eingestellten und fortlaufend wiederholten $a_o$-mode-Lambwellenimpulses erfolgen.

Da sich die Laufzeit T der $a_o$-mode-Lambwellen aber auch als temperaturabhängig erwiesen hat, empfiehlt es sich, die Meßvorrichtung z.B. mittels eines Temperatursensors zu kalibrieren. Eine andere Maßnahme, Temperaturschwankungen zu kompensieren und das Meßergebnis temperaturunabhängig zu machen, kann darin bestehen, im vom Füllgut freibleibenden Bereich eine Referenzmeßstrecke vorzusehen.

Fig. 5 zeigt das Prinzip einer solchen Fortbildung der Meßvorrichtung gemäß Fig. 4. Nach diesem Vorschlag ist oberhalb der maximal zulässigen Füllhöhe L und in einem bestimmten Abstand d zum Lambwellenerreger 6 ein zweiter Lambwellenempfänger 7' an der Außenwand 1a des Behälters 4 angebracht. Durch den Abstand d wird so eine Referenzmeßstrecke d definiert. Da der Behälter 4 in diesem Bereich immer von Füllgut 5 frei bleibt, entspricht die hier zwischen dem Lambwellenerreger 6 und dem zweiten Lambwellenempfänger 7' meßbare Laufzeit $T_{ref}$ immer der Laufzeit $T_1$ bei leerem Behälter 4 und kann so als Referenzgröße genutzt werden, um bei auftretenden Temperaturschwankungen und sich dadurch ändernder Gruppengeschwindigkeit $C_1$ aus ihr die jeweils geltende Laufzeit $T_1$ bei leerem Behälter 4 abzuleiten, wobei gilt: $T_{ref} = \frac{d}{C_1}$ und $T_1 = \frac{L}{C_1}$ also $T_1 = \frac{L}{d} T_{ref}$

Dieser Faktor L/d muß dann also in die Kalibrierung der Meßvorrichtung eingehen, um letztlich temperaturunabhängige Meßergebnisse zu erhalten.

Es wird die Laufzeit $T_2$ und die Referenzlaufzeit $T_{ref}$ des vom Lambwellensender 6 ausgesandten Lambwellenimpulses in beiden Richtungen zu den Lambwellenempfängern 7 und 7' ermittelt, aus der Referenzlaufzeit $T_{ref}$ die unter den augenblicklichen Konditionen geltende Laufzeit $T_1$ bei leerem Behälter mit Hilfe des Faktors L/d abgeleitet und die Differenz $\Delta T = T_2 - T_1$ als eine dem aktuellen Füllstand direkt proportionale Meßgröße gebildet, die bei dieser Ausführungsform der Meßvorrichtung temperaturunabhängig ist. Bei dieser Ausführungsform der Meßvorrichtung mit Temperaturkompensation ist die Anordnung des Lambwellenempfängers 6 an der Behälterwand 1 in Höhe (oder um ein Toleranzmaß über der Höhe) des maximal zulässigen Füllstandes zwingend, um die Laufzeitmessung in beiden Richtungen durchführen zu können.

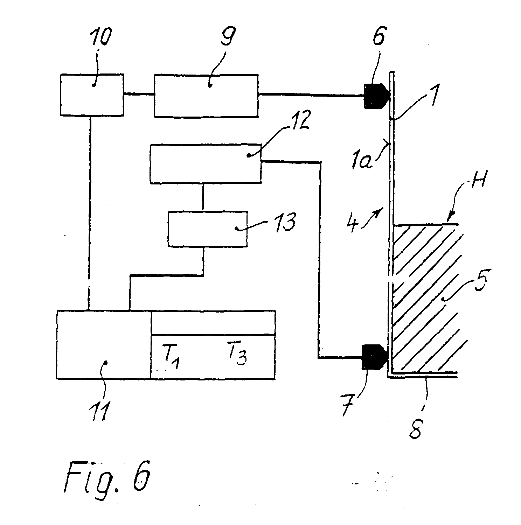

Fig. 6 zeigt das Blockschema einer Füllstandsmeßvorrichtung nach Fig. 4. An der Außenwand 1a des Behälters 4, der zum Teil mit einem Füllgut 5 befüllt ist, sind in Höhe des maximal zulässigen Füllstandes der Lambwellensender 6 und dicht über dem Behälterboden 8 der Lambwellenempfänger 7 angeordnet. Der Lambwellensender 6 ist verbunden mit einem Pulsgenerator 9, z.B. in Form eines elektro-äkustischen Wandlers, dessen Impulsabgabe oder Impulsrate über einen Taktgeber 10 von einer Software 11 gesteuert wird. In dieser Software sind u.a. auch die Daten gespeichert, die für die Erregung einer $a_o$-mode-Lambwelle in der Behälterwand 1 ausschlaggebend sind und die unter Umständen, z.B. weil sie materialabhängig sind, für jeden Anwendungsfall empirisch zu ermitteln sind, wie etwa die Frequenz f des durch den Lambwellenerreger 6 auf die Behälterwand aufzugebenden Ultraschallsignals. Die optimale Einstellung der $a_o$-mode-Lambwelle kann erfolgen, indem die Frequenz des Ultraschallsignals verändert wird und die Lambwelle gesucht wird, deren Amplitudenänderung $\Delta A$ bei Befüllung des Behälters 4 ein Minimum aufweist und deren Laufzeitänderung $\Delta T$ dabei ein Maximum hat. Der Lambwellenempfänger 7 nimmt die sich in der Behälterwand 1 auf direktem Weg ausbreitenden Lambwellenimpulse auf und verwandelt sie in ein elektrisches Signal zurück; dieses kann vorteilhafterweise in einem Band-pass-Filter 12 von störenden Nebenwellen befreit und über einen Verstärker 13 in die Software 11 zur Auswertung und zur Ermittlung der Laufzeitdifferenz $\Delta T$ eingegeben werden. Dazu sind in der Software 11 die für den betreffenden Anwendungsfall geltende Laufzeit $T_1$ des Lambwellenimpulses bei leerem Behälter 4 und auch die Laufzeit T für den bis zur maximal zulässigen Füllhöhe mit Füllgut 5 befüllten Behälter 4 abgespeichert. Aus der Laufzeitdifferenz $\Delta T$ kann direkt der augenblickliche Füllstand abgelesen werden.

Es empfiehlt sich den Impuls vom elektro-akustischen Wandler mit der halben Wellenlänge $\lambda/2$ abzunehmen, um die Meßvorrichtung unempfindlich gegen Außenwirkungen, wie Erschütterungen und Fremdvibrationen, zu machen.

**Patentansprüche**

1. Verfahren zur Füllstandsmessung an Behältern, nach dem in der Behälterwand (1) durch einen an ihr angeordneten Lambwellenerreger (6) eine Folge von $a_o$-mode-Lambwellenimpulsen ausgelöst wird und die Laufzeitdifferenz ($\Delta T$) zwischen der Laufzeit ($T_2$) dieser $a_o$-mode-Lambwellenimpulse zwischen dem Lambwellenerreger (6) und einem im Abstand zu diesem an der Behälterwand (1) angeordneten Lambwellenempfänger (7) bei dem momentanen Füllstand des Behälters (4) und der Laufzeit ($T_1$) über derselben Strecke bei leerem Behälter (4) ermittelt wird und daraus die dieser Laufzeitdifferenz ($\Delta T$) direkt proportionale momentane Füllstandshöhe abgeleitet wird.

2. Verfahren nach Anspruch 1, nach dem die Laufzeit ($T_1$) der $a_o$-mode-Lambwelle zwischen dem Lambwellenerreger (6) und dem Lambwellenempfänger (7) bei leerem Behälter als Bezugsgröße in einer Software (11) zur Ermittlung der Laufzeitdifferenz ($\Delta T$) abgespeichert wird.

3. Verfahren nach Anspruch 2, nach dem eine auf Temperaturschwankungen beruhende Änderung der Laufzeit der $a_o$-mode-Lambwelle in der Behälterwand (1) abhängig vom Meßwert eines Temperaturmeßfühlers ausgeglichen wird.

4. Verfahren nach Anspruch 1, nach dem die sich mit der Füllhöhe im Behälter (4) ändernde Laufzeit ($T_2$) der Lambwelle über einer sich über den Füllbereich des Behälters (4) erstreckenden Meßstrecke (L) und die für den leeren Behälter (4) geltende Laufzeit ($T_1$) der Lambwelle über einer sich außerhalb des Füllbereichs erstreckenden Referenzstrecke (d) fortlaufend gemessen werden.

5. Vorrichtung zur Durchführung des Verfahrens nach einem der Ansprüche 1 bis 3, bei der an der Außenwand (1a) des Behälters (4) in Höhe der maximal zulässigen Füllhöhe (L) der $a_o$-mode-Lambwellensender (6) oder der $a_o$-mode-Lambwellenempfänger (7) und dicht über dem Behälterboden (8) der $a_o$-mode Lambwellenempfänger (7) oder der $a_o$-mode-Lambwellensender (6) angeordnet ist.

6. Vorrichtung nach Anspruch 5, bei der der $a_o$-mode-Lambwellensender (6) über einen Pulsgenerator (9) und einen Taktgeber (10) und der $a_o$-mode Lambwellenempfänger (7) über ein Band-pass Filter (12) und einen Verstärker (13) mit einer Software (11) verbunden sind, in der die Laufzeit ($T_1$) der $a_o$-mode-Lambwelle bei leerem Behälter (4) abgespeichert ist.

7. Vorrichtung nach Anspruch 6, bei der auch die Lauf-

zeit ($T_3$) der $a_o$-mode-Lambwelle bei bis zur maximal zulässigen Füllhöhe befülltem Behälter (4) in der Software (11) abgespeichert ist.

8. Vorrichtung zur Durchführung des Verfahrens nach Anspruch 4, bei der an der Außenwand (la) des Behälters (4) in Höhe der maximal zulässigen Füllhöhe (L) der $a_o$-mode-Lambwellensender (6) und dicht über dem Behälterboden (8) ein erster $a_o$-mode- Lambwellenempfänger (7) und außerhalb des Füllbereiches im Abstand (d) zum $a_o$-mode-Lambwellensender (6) ein zweiter $a_o$-mode-Lambwellenempfänger (7') angeordnet ist, wobei dieser Abstand (d) als Referenzmeßstrecke zur fortlaufenden Ermittlung der Laufzeit ($T_1$) der $a_o$-mode-Lambwelle bei leerem Behälter (4) dient.

Fig. 1

Fig. 2

Fig. 2a

Fig. 3

Fig. 4

Fig. 5

Fig. 6

**Europäisches Patentamt**

**EUROPÄISCHER RECHERCHENBERICHT**

Nummer der Anmeldung

EP 99 11 0858

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 0 316 564 A (BOSCH GMBH ROBERT) 24. Mai 1989 (1989-05-24) * Seite 2, Zeile 55 - Seite 4, Zeile 27; Abbildungen 1,3 * --- | 1,2 | G01F23/296 |
| Y | EP 0 621 462 A (PANAMETRICS) 26. Oktober 1994 (1994-10-26) * Spalte 6, Zeile 33 - Zeile 38 * * Spalte 9, Zeile 41 - Spalte 11, Zeile 23; Abbildungen 4A,C * --- | 1,2 | |
| A | GB 2 206 965 A (ATOMIC ENERGY AUTHORITY UK) 18. Januar 1989 (1989-01-18) * Seite 4, Zeile 4 - Zeile 9 * * Seite 9, Zeile 25 - Seite 10, Zeile 1; Abbildung 4 * ----- | 1 | |

RECHERCHIERTE SACHGEBIETE (Int.Cl.7)

G01F

Der vorliegende Recherchenbericht wurde für alle Patentansprüche erstellt

| Recherchenort | Abschlußdatum der Recherche | Prüfer |
|---|---|---|
| DEN HAAG | 26. November 1999 | Pflugfelder, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 11 0858

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-11-1999

| Im Recherchenbericht angeführtes Patentdokument | | Datum der Veröffentlichung | Mitglied(er) der Patentfamilie | | Datum der Veröffentlichung |
|---|---|---|---|---|---|
| EP 0316564 | A | 24-05-1989 | DE | 3738515 A | 24-05-1989 |
| | | | DE | 3864493 A | 02-10-1991 |
| | | | EP | 0412580 A | 13-02-1991 |
| | | | US | 4896535 A | 30-01-1990 |
| | | | US | 4920796 A | 01-05-1990 |
| EP 0621462 | A | 26-10-1994 | US | 5456114 A | 10-10-1995 |
| | | | JP | 7167687 A | 04-07-1995 |
| GB 2206965 | A | 18-01-1989 | DE | 3822138 A | 19-01-1989 |
| | | | FR | 2617966 A | 13-01-1989 |
| | | | JP | 1029715 A | 31-01-1989 |
| | | | US | 4890490 A | 02-01-1990 |

EPO FORM P0461

Für nähere Einzelheiten zu diesem Anhang : siehe Amtsblatt des Europäischen Patentamts, Nr.12/82